**Europäisches Patentamt**

**European Patent Office**

**Office européen des brevets**

(19)

(11) Veröffentlichungsnummer : **0 073 185**
**B1**

(12) **EUROPÄISCHE PATENTSCHRIFT**

(45) Veröffentlichungstag der Patentschrift :
03.04.85

(51) Int. Cl.⁴ : **B 23 K 37/00**

(21) Anmeldenummer : **82890119.9**

(22) Anmeldetag : **11.08.82**

(54) Schweissautomat.

(30) Priorität : 25.08.81 AT 3694/81

(43) Veröffentlichungstag der Anmeldung :
02.03.83 Patentblatt 83/09

(45) Bekanntmachung des Hinweises auf die Patenterteilung : 03.04.85 Patentblatt 85/14

(84) Benannte Vertragsstaaten :
**BE DE FR GB IT SE**

(56) Entgegenhaltungen :
**AT-B- 363 298
DE-A- 1 515 169
DE-A- 2 237 969
DE-A- 2 442 725
DE-A- 2 715 465
DE-A- 2 754 436
GB-A- 1 511 609
JP-A-52 093 072
JP-A-53 120 063
JP-A-55 045 563
US-A- 4 233 491
"SCHWEISSEN UND SCHNEIDEN", Heft 1, Jahrgang 29, 1977, DEUTSCHER VERLAG FÜR SCHWEISSEN, DVS-GMBH, Düsseldorf, Seite 20**

(73) Patentinhaber : **IGM - Industriegeräte- und Maschinenfabriks-gesellschaft mbH
Industriezentrum NÖ-Süd Strasse 2a, Halle M8
A-2351 Wiener Neudorf Niederösterreich (AT)**

(72) Erfinder : **Vokurka, Franz
Minorgasse 60
A-1140 Wien (AT)**

(74) Vertreter : **Beer, Otto, Dipl.-Ing. et al
Patentanwälte Dipl.-Ing. Otto Beer Dipl.-Ing. Manfred Beer Lindengasse 8
A-1070 Wien (AT)**

## Beschreibung

Die Erfindung betrifft einen Schweißautomat mit einem horizontalen Balken, an dem zwei oder mehrere Schweißpistolen oder -zangen über in Richtung der Längsachse des Balkens verschiebbare Halterungen, die gegenüber dem Balken um Achsen verdrehbar sind, nach mehreren Freiheitsgraden bewegbar gehaltert sind.

Ein derartiger Schweißautomat ist aus der AT-B-363 298 bekannt.

Bei Industrierobotern zur Ausführung von Schweißarbeiten ergibt sich häufig das Problem, eine große Positionierungsgenauigkeit der Schweißpistolen oder -zangen bei möglichst großem Bewegungsspielraum (Reichweite) zu gewährleisten. Die an sich bekannten Knickarmroboter (GB-A-1 511 609 und « schweissen + schneiden ») besitzen bei guter Positionierungsgenauigkeit einen annehmbaren Bewegungsbereich, wobei es aus Gründen der Wirtschaftlichkeit und des Platzbedarfes allerdings nicht vorteilhaft ist, jeden Knickarmroboter für sich verschiebbar zu haltern. Die aus den oben genannten Dokumenten bekannten Knickarmroboter werden daher stets ortsfest angeordnet (vgl. GB-A-1 511 609, Seite 2, Z. 73 bis 83).

Der Erfindung liegt die Aufgabe zugrunde, ausgehend von der vorstehend dargelegten Problemstellung die bekannten Schweißautomaten weiterzubilden.

Erfindungsgemäß zeichnet sich der Schweißautomat der eingangs genannten Gattung dadurch aus, daß die Halterungen der Schweißpistolen oder -zangen als Knickarmroboter aus-gebildet sind.

Dank der erfindungsgemäßen Verwendung von Knickarmrobotern als Halterungen für die Schweißpistolen oder -zangen werden die Einsatzmöglichkeiten und der Bewegungsspielraum des Schweißautomaten ganz erheblich vergrößert.

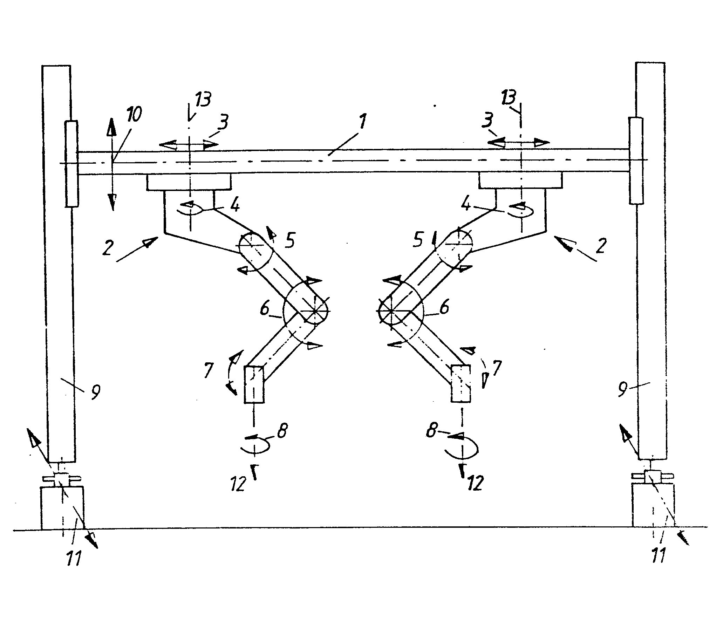

Weitere Einzelheiten und Merkmale der Erfindung ergeben sich aus den Unteransprüchen und der nachstehenden Beschreibung des in der Zeichnung schematisch wiedergegebenen Ausführungsbeispieles.

An einem im wesentlichen horizontal verlaufenden Balken 1 sind zwei Knickarmroboter 2 in Richtung der Doppelpfeile 3, d. h. in Längsrichtung des Balkens 1 verschiebbar gehaltert.

Die Knickarmroboter 2 können für sich einen an sich bekannten Aufbau besitzen. So sind im gezeigten Ausführungsbeispiel des erfindungsgemäßen Schweißautomaten Knickarmroboter 2 mit fünf Achsen vorgesehen. Die Bewegungsmöglichkeiten der Knickarmroboter sind durch die Pfeile 4, 5, 6, 7 und 8 veranschaulicht.

Um die Bewegungsmöglichkeiten weiter zu vergrößern, ist der Balken 1 an einem oder beiden seiner Enden an Säulen 9 in Richtung des Doppelpfeiles 10, d. h. auf- und abverschiebbar geführt. Weiters können die Säulen 9 zur waagrechten Bewegung des Balkens 1 in der durch die Pfeile 11 angedeuteten, senkrecht zur Bildebene liegenden Richtung hin- und hereverschoben werden.

Die Knickarmroboter 2 können am Balken unabhängig voneinander verschiebbar sein oder aber zur Herstellung zueinander parallel verlaufender oder symmetrischer Schweißnähte am Balken 1 um gleiche Wegstrecken in entgegengesetzte oder gleiche Richtungen verschiebbar sein. Bei dieser Ausführungsform genügt es, die Steuereinheit für die Bewegungen des Schweißautomaten einmal entsprechend zu programmieren und dann beide Knickarmroboter 2 oder im Falle mehrere am Balken 1 angeordneter Knickarmroboter mehr als zwei oder auch alle Knickarmroboter gleichzeitig zu steuern. Diese Ausführungsform wird man wählen, wenn man beispielsweise an verschiedenen Werkstücken gleichzeitig gleichartige Schweißnähte herstellen will.

Bei der Herstellung in sich geschlossener, beispielsweise symmetrischer Schweißnähte ist es von Vorteil, wenn die Schweißpistolen oder -zangen 12 vom gleichen Anfangspunkt ausgehend die Naht in entgegengesetzten Richtungen schweißt, so daß die Schweißung in einem gemeinsamen Bad schmelzflüssigem Metalls beginnt und in einem gemeinsamen Bad endet. Hiezu ist es aus räumlichen Gründen von Vorteil, wenn die Drehachsen 13 der Knickarmroboter 2 nicht parallel zueinander verlaufen, sondern miteinander einen Winkel einschließen. Hiebei gibt es verschiedene Möglichkeiten. Beispielsweise liegen beide (oder im Falle mehrerer Knickarmroboter alle) Achsen 13 in der gleichen, vorzugsweise vertikal oder horizontal verlaufenden Ebene, in der beispielsweise auch die Längsachse des Balkens 1 liegen kann. Hiebei schließt mindestens eine der Achsen 13 mit der Längsachse des Balkens 1 einen spitzen Winkel ein. Eine andere Möglichkeit besteht darin, daß die Achse 13 eines Knickarmroboters 2 vertikal ausgerichtet ist, wogegen die Achse des anderen Knickarmroboters 2 horizontal verläuft.

Im übrigen können die Drehachsen 13 der Knickarmroboter 2 in beliebigen Richtungen, so z. B. lotrecht oder waagrecht, verlaufen.

## Ansprüche

1. Schweißautomat mit einem horizontalen Balken (1), an dem zwei oder mehrere Schweißpistolen oder -zangen (12) über in Richtung der Längsachse des Balkens (1) verschiebbare Halterungen (2), die gegenüber dem Balken (1) um Achsen (13) verdrehbar (Pfeil 4) sind, nach mehreren Freiheitsgraden bewegbar gehaltert sind, dadurch gekennzeichnet, daß die Halterungen der Schweißpistolen (12) oder -zangen als Knickarmroboter (2) ausgebildet sind.

2. Schweißautomat nach Anspruch 1, dadurch gekennzeichnet, daß die Knickarmroboter (2) am Balken (1) unabhängig voneinander verschiebbar geführt sind.

3. Schweißautomat nach Anspruch 1, dadurch gekennzeichnet, daß die Knickarmroboter (2) am Balken (1) um gleiche Wegstrecken in entgegengesetzte oder gleiche Richtungen verschiebbar geführt sind.

4. Schweißautomat nach einem der Ansprüche 1 bis 3, dadurch gekennzeichnet, daß die Drehachsen (13) der Knickarmroboter (2) zueinander parallel verlaufen.

5. Schweißautomat nach einem der Ansprüche 1 bis 3, dadurch gekennzeichnet, daß die Drehachse (13) von wenigstens einem der Knickarmroboter (2) gegenüber der Drehachse (13) eines anderen Knickarmroboters (2) geneigt ist.

6. Schweißautomat nach Anspruch 5, dadurch gekennzeichnet, daß die Achsen (13) der Knickarmroboter (2) miteinander einen Winkel von z. B. 90° einschließen, wobei zumindest eine der Achsen (13) in einer zur Längsachse des Balkens (1) senkrechten Ebene liegt.

7. Schweißautomat nach einem der Ansprüche 1 bis 6, dadurch gekennzeichnet, daß der Balken (1) an einem Ende oder an seinen beiden Enden an einer bzw. zwei lotrecht stehenden Säulen (9) auf- und abverschiebbar (Pfeil 10) geführt ist.

8. Schweißautomat nach einem der Ansprüche 1 bis 7, dadurch gekennzeichnet, daß der Balken (1) durch Verschieben der ihn tragenden Säule bzw. Säulen (9) horizontal (Pfeil 11) verschiebbar ist.

## Claims

1. An automatic welding machine comprising a horizontal beam (1) on which two or more welding guns or tongs (12) are mounted movably with a plurality of degrees of freedom by way of mountings (2) which are displaceable in the direction of the longitudinal axis of the beam (1) and which are rotatable relative to the beam (1) about axes (13) (arrow 4), characterised in that the mountings of the welding guns (12) or tongs are formed as bending arm robots (2).

2. An automatic welding machine according to claim 1 characterised in that the bending arm robots (2) are guided displaceably independently of each other on the beam (1).

3. An automatic welding machine according to claim 1 characterised in that the bending arm robots (2) are guided on the beam (1) displaceably by equal distances in opposite or the same directions.

4. An automatic welding machine according to one of claims 1 to 3 characterised in that the axes of rotation (13) of the bending arm robots (2) extend parallel to each other.

5. An automatic welding machine according to one of claims 1 to 3 characterised in that the axis of rotation (13) of at least one of the bending arm robots (2) is inclined with respect to the axis of rotation (13) of another bending arm robot (2).

6. An automatic welding machine according to claim 5 characterised in that the axes (13) of the bending arm robots (2) include an angle of for example 90° to each other, wherein at least one of the axes (13) is disposed in a plane normal to the longitudinal axis of the beam (1).

7. An automatic welding machine according to one of claims 1 to 6 characterised in that the beam (1) is guided for upward and downward movement (arrow 10) at one end or at both of its ends, on one or two perpendicularly disposed columns (9).

8. An automatic welding machine according to one of claims 1 to 7 characterised in that the beam (1) is displaceable horizontally (arrow 11) by displacement of the columns or column (9) carrying same.

## Revendications

1. Dispositif automatique de soudage, avec une barre horizontale (1) sur laquelle deux ou plus de deux pistolets, ou pinces, à souder (12) sont maintenus mobiles selon plusieurs degrés de liberté par des fixations (2) déplaçables en translation en direction de l'axe longitudinal de ladite barre (1), lesquelles sont tournables (flèche 4) par rapport à celle-ci autour d'axes (13) caractérisé par le fait que les fixations des pistolets, ou pinces, à souder (12) sont établies en robots à bras pliants (2).

2. Dispositif automatique de soudage selon la revendication 1 caractérisé par le fait que les robots à bras pliants (2) sont guidés déplaçables en translation indépendamment les uns des autres sur la barre (1).

3. Dispositif automatique de soudage selon la revendication 1 caractérisé par le fait que les robots à bras pliants (2) sont guidés déplaçables en translation de mêmes distances dans des sens opposés ou identiques sur la barre (1).

4. Dispositif automatique de soudage selon une des revendications 1 à 3 caractérisé par le fait que les axes de rotation des robots à bras pliants (2) sont parallèles entre eux.

5. Dispositif automatique de soudage selon une des revendications 1 à 3 caractérisé par le fait que l'axe de rotation (13) d'au moins un des robots à bras pliants (2) est incliné par rapport à l'axe de rotation (13) d'un autre robot à bras pliants (2).

6. Dispositif automatique de soudage selon la revendication 5 caractérisé par le fait que les axes (13) des robots à bras pliants (2) comprennent entre eux un angle de par exemple 90°, l'un au moins des axes (13) étant dans un plan perpendiculaire à l'axe longitudinal de la barre (1).

7. Dispositif automatique de soudage selon une des revendications 1 à 6 caractérisé par le fait que la barre (1) est guidée déplaçable en translation vers le haut et vers le bas (flèche 10), à une extrémité ou à ses deux extrémités, sur une ou deux colonnes verticales (9).

8. Dispositif automatique de soudage selon une des revendications 1 à 7 caractérisé par le fait que la barre (1) est déplaçable en translation horizontale (flèche 11) par translation de la ou des colonnes (9) qui la supportent.

1